# EUROPÄISCHE PATENTANMELDUNG

(11) **EP 1 166 860 A2**
(43) Veröffentlichungstag der Anmeldung: **02.01.2002**
(21) Anmeldenummer: 01114428.4
(22) Anmeldetag: 15.06.2001
(51) Int. Cl.: B01D 69/12, B01D 71/02, B01D 67/00, B01D 61/36, B01D 53/22

(54) **Polyelektrolytbeschichteter, stoffdurchlässiger Verbundwerkstoff, Verfahren zu dessen Herstellung und die Verwendung des Verbundwerkstoffes**

(30) Priorität: 27.06.2000 DE 10031281
(71) Anmelder: Creavis Gesellschaft für Technologie und Innovation mbH, 45772 Marl (DE)
(72) Erfinder: Hying, Christian, Dr., 46414 Rhede (DE); Hörpel, Gerhard, Dr., 48301 Nottuln (DE); Tieke, Bernd, Prof. Dr., 50321 Brühl (DE); Krasemann, Lutz, Dr., 50939 Köln (DE); Toutianoush, Ali, 50968 Köln (DE)

(57) **Zusammenfassung**

Die Erfindung betrifft einen polyelektrolytbeschichteten, stoffdurchlässigen Verbundwerkstoff, ein Verfahren zur Herstellung dieses Verbundwerkstoffes und die Nutzung dieses Verbundwerkstoffes in verschiedenen Prozessen.

Für verschiedene chemische oder physikalische Prozesse, wie z. B. Stoff-trennungsprozesse werden Membranen auf Basis von Polymeren eingesetzt. Diese Polymere sind relativ unbeständig gegenüber Lösemitteln und hohen Temperaturen. Vor diesem Hintergrund war es Ziel der vorliegenden Erfindung, einen polyelektrolytbeschichteten Verbundwerkstoff zur Verfügung zu stellen. Der erfindungsgemäße Verbundwerkstoff besteht überwiegend aus anorganischen Bestandteilen und zeichnet sich durch eine große Stabilität gegenüber Säuren und hohen Temperaturen aus. Erfindungsgemäß wird ein Oberflächenladungen aufweisender, stoffdurchlässiger Verbundwerkstoff mit zumindest einem Polyelektrolyten beschichtet.

Ein erfindungsgemäß hergestellter, ionenleitender Verbundwerkstoff kann als Membran in Brennstoffzellen oder als Membran bei der Pervaporation oder Dampfpermeation eingesetzt werden.

## Beschreibung

Die vorliegende Erfindung betrifft einen polyelektrolytbeschichteten, stoffdurchlässigen Verbundwerkstoff, dessen Herstellung und Verwendung.

Stoffdurchlässige Verbundwerkstoffe sind vielseitig einsetzbare Werkstoffe. Besonders geeignet sind solche Werkstoffe für den Einsatz als Membranen.

Membranen für die Trennung von z. B. Ethanol/Wasser-Gemischen mittels Pervaporation sind in der Literatur hinreichend beschrieben. Kommerziell erhältliche Produkte basieren auf Membranen, die einen mehrschichtigen Aufbau zeigen. Sie bestehen aus einer hochporösen Polymerträgerstruktur (meist eine Polyacrylnitril-Membran auf einem Polyestervlies) auf die eine vemetzte Polyvinylalkohol-Schicht aufgebracht wurde. Diese besitzt meist eine Dicke von wenigen Mikrometern.

Weitere Polymere, die sich zur Herstellung einer selektiven Deckschicht eignen, sind Blockcopolymere aus Polyolen und Polyurethanen. Zudem werden in letzter Zeit zunehmend anorganische Materialien eingesetzt. Hier wären vor allem Membranen mit Zeolithdeckschichten sowie Silica-Schichten zu nennen. Komposit-Materialien wie Zeolith gefüllte Polysiloxane wurden ebenso eingehend untersucht (R.Y.M. Huang (Ed.), "Pervaporation Membrane Separation Processes", Elsevier, Amsterdam 1991).

In der Literatur ist außerdem der Einsatz von Polyelektrolytschichten als selektive Schichten in Membranen häufig beschrieben worden (K. Richau, H.-H. Schwarz, R. Apostol, D. Paul; J. Membr. Sci. 113, (1996) 31, Sang Yong Nam, Young Moo Lee; J. Membr. Sci 135 (1997) 161 und P. Stroeve; V. Vasquez; M.A.N. Coelho; J.F. Rabolt; Thin Solid Films 284/285 (1996) 706). Insbesondere die Methode der Herstellung selbstorganisierter Polyelektrolytschichten, wie sie von einigen Autoren vorgeschlagen wurde (F. van Ackern; L. Krasemann; B. Tieke; Thin Solid Films 327-329 (1998) 762 und L. Krasemann; B. Tieke; J. Membr. Sci. 150 (1998) 23), eignet sich sehr gut zur Herstellung von besonders dünnen Schichten. Da sich der Fluss durch eine Membran umgekehrt proportional zur Schichtdicke der Membran verhält, kann durch eine solche Membran ein großer Fluss erreicht werden.

Die Abscheidung solcher Polyelektrolytschichten erfolgt üblicherweise auf durch Plasma-Behandlung aktivierten Polyacrylnitril-Träger, wie er auch für Polyvinylalkohol-Membrane genutzt wird.

EP 0 472 990 beschreibt das Abscheiden von Polyelektolyten als Monoschicht auf ebenmäßigen organischen oder anorganischen Oberflächen die nicht stoffdurchlässig sind und deshalb nicht als Membranen eingesetzt werden können.

All diese Membran-Systeme haben eine Reihe von Nachteilen. Die Polymermembrane und die Zeolith gefüllten Polymermembrane sind nicht ausreichend temperaturstabil, um bei Temperaturen oberhalb von 80 °C gleich bleibende Trennergebnisse zu erzielen. Die zeolithischen und silica-beschichteten anorganischen Membranen, welche bei höheren Temperaturen sehr gut arbeiten, sind entsprechend teuer und kommerziell kaum verfügbar. Zudem sind sie sehr anfällig gegenüber sauren Medien, die innerhalb von einigen Minuten bis zu einigen Stunden die selektiven Schichten dieser Membranen zerstören. Die anorganischen Membranen sind außerdem im allgemeinen nicht flexibel und werden deshalb bei Zug- oder Torsionsbeanspruchung leicht zerstört.

Aufgabe der vorliegenden Erfindung war es deshalb, eine Pervaporationsmembran bereitzustellen, die bei höheren Temperaturen und/oder bei einem pH-Wert < 7 haltbar ist und gute Trennergebnisse liefert.

Überraschenderweise wurde gefunden, dass Polyelektrolytschichten nicht nur auf organischem Trägermaterial oder auf ebenmäßigen Oberflächen abgeschieden werden können sondern auch auf anorganischen bzw. keramischen stoffdurchlässigen Oberflächen. Ein solcher Polyelektrolyt-beschichteter, stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, kann als Pervaporationsmembran auch bei höheren Temperaturen sowie bei pH-Werten < 7 eingesetzt werden.

Gegenstand der vorliegenden Erfindung ist deshalb ein stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, der dadurch gekennzeichnet ist, dass der Verbundwerkstoff auf den inneren und/oder äußeren Oberflächen zumindest eine Polyelektrolytschicht trägt.

Ebenfalls Gegenstand der vorliegenden Erfindung ist ein Verfahren zur Herstellung eines Verbundwerkstoffes gemäß zumindest einem der Ansprüche 1 bis 14, welches dadurch gekennzeichnet ist, dass ein Oberflächenladungen aufweisender Verbundwerkstoff auf Basis zumindest eines durchbrochenen und stoffdurchlässigen Trägers, der auf zumindest einer Seite des Trägers und/oder im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, zumindest einmal mit einem Polyelektrolyt beschichtet wird.

Außerdem ist Gegenstand der vorliegenden Erfindung die Verwendung eines Verbundwerkstoffes gemäß zumindest einem der Ansprüche 1 bis 14 als Membran zur Trennung von Alkohol/Wasser-Gemischen, insbesondere Ethanol/Wasser-Gemischen.

Der erfindungsgemäße polyelektrolytbeschichtete Verbundwerkstoff ist sehr gut als Membran für die Pervaporation geeignet. Durch den besonderen Aufbau des erfindungsgemäßen polyelektrolytbeschichteten Verbundwerkstoffes erhält man chemisch und thermisch besonders stabile Membrane, die außerdem sehr hohe Flussleistungen und Trennfaktoren aufweisen.

Der erfindungsgemäße Verbundwerkstoff wird im folgenden beispielhaft beschrieben, ohne darauf beschränkt zu sein.

Der erfindungsgemäße stoffdurchlässige Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, trägt auf den inneren und/oder äußeren Oberflächen zumindest eine Polyelektrolytschicht. Unter dem Inneren eines Trägers werden in der vorliegenden Erfindung Hohlräume oder Poren in einem Träger verstanden.

Erfindungsgemäß kann der durchbrochene und stoffdurchlässige Träger Zwischenräume mit einer Größe von 5 nm bis 500 µm, vorzugsweise mit einer Größe von 50 nm bis 50 µm und ganz besonders bevorzugt mit einer Größe von 50 nm bis 5 µm aufweisen. Die Zwischenräume können Poren, Maschen, Löcher, Kristallgitterzwischenräume oder Hohlräume sein. Der Träger kann zumindest ein Material, ausgewählt aus Kohlenstoff, Metallen, Legierungen, Glas, Keramiken, Mineralien, Kunststoffen, amorphen Substanzen, Naturprodukten, Verbundstoffen oder aus zumindest einer Kombination dieser Materialien, aufweisen. Die Träger, welche die vorgenannten Materialien aufweisen können, können durch eine chemische, thermische oder einer mechanischen Behandlungsmethode oder einer Kombination der Behandlungsmethoden modifiziert worden sein. Vorzugsweise weist der Verbundwerkstoff einen Träger, der zumindest ein Metall, eine Naturfaser oder einen Kunststoff aufweist, auf, der nach zumindest einer mechanischen Verformungstechnik bzw. Behandlungsmethode, wie z. B. Ziehen, Stauchen, Walken, Walzen, Recken oder Schmieden modifiziert wurde. Ganz besonders bevorzugt weist der Verbundwerkstoff zumindest einen Träger, der zumindest verwobene, verklebte, verfilzte oder keramisch gebundene Fasern, oder zumindest gesinterte oder verklebte Formkörper, Kugeln oder Partikel aufweist, auf. In einer weiteren bevorzugten Ausführung kann ein perforierter Träger verwendet werden. Stoffdurchlässige Träger können auch solche sein, die durch Laserbehandlung oder Ionenstrahlbehandlung stoffdurchlässig werden oder gemacht worden sind.

Es kann vorteilhaft sein, wenn der Träger Fasern aus zumindest einem Material, ausgewählt aus Kohlenstoff, Metallen, Legierungen, Keramiken, Glas, Mineralien, Kunststoffen, amorphen Substanzen, Verbundstoffen und Naturprodukten oder Fasern aus zumindest einer Kombination dieser Materialien, wie z. B. Asbest, Glasfasern, Kohlefasern, Metalldrähte, Stahldrähte, Steinwollfasern, Polyamidfasern, Kokosfasern, beschichtete Fasern, aufweist. Vorzugsweise werden Träger verwendet, die verwobene Fasern aus Metall oder Legierungen aufweisen. Als Fasern aus Metall können auch Drähte dienen. Ganz besonders bevorzugt weist der Verbundwerkstoff einen Träger auf, der zumindest ein Gewebe aus Stahl oder Edelstahl, wie z. B. aus Stahldrähten, Stahlfasern, Edelstahldrähten oder Edelstahlfasern durch Weben hergestellte Gewebe, aufweist, welches vorzugsweise Maschenweite von 5 bis 500 µm, besonders bevorzugt Maschenweiten von 5 bis 50 oder von 50 bis 500 µm und ganz besonders bevorzugt Maschenweiten von 70 bis 120 µm, aufweist.

Der Träger des Verbundwerkstoffes kann aber auch zumindest ein Streckmetall mit einer Porengröße von 5 bis 500 µm aufweisen. Erfindungsgemäß kann der Träger aber auch zumindest ein körniges, gesintertes Metall, ein gesintertes Glas oder ein Metallvlies mit einer Porenweite von 0,1 µm bis 500 µm, vorzugsweise von 3 bis 60 µm, aufweisen.

Der erfindungsgemäße Verbundwerkstoff weist vorzugsweise zumindest einen Träger auf, der zumindest Aluminium, Silicium, Kobalt, Mangan, Zink, Vanadium, Molybdän, Indium, Blei, Wismut, Silber, Gold, Nickel, Kupfer, Eisen, Titan, Platin, Edelstahl, Stahl, Messing, eine Legierung aus diesen Materialien oder ein mit Au, Ag, Pb, Ti, Ni, Cr, Pt, Pd, Rh, Ru und/oder Ti beschichtetes Material aufweist.

Die im erfindungsgemäßen Verbundwerkstoff vorhandene anorganische Komponente weist zumindest eine Verbindung aus zumindest einem Metall, Halbmetall oder Mischmetall mit zumindest einem Element der 3. bis 7. Hauptgruppe des Periodensystems oder zumindest eine Mischung dieser Verbindungen auf. Dabei können die Verbindungen der Metalle, Halbmetalle oder Mischmetalle zumindest Elemente der Nebengruppenelemente und der 3. bis 5. Hauptgruppe oder zumindest Elemente der Nebengruppenelemente oder der 3. bis 5. Hauptgruppe aufweisen, wobei diese Verbindungen eine Korngröße von 0,001 bis 25 µm aufweisen. Vorzugsweise weist die anorganische Komponente zumindest eine Verbindung eines Elementes der 3. bis 8. Nebengruppe oder zumindest eines Elementes der 3. bis 5. Hauptgruppe mit zumindest einem der Elemente Te, Se, S, O, Sb, As, P, N, Ge, Si, C, Ga, Al oder B oder zumindest eine Verbindung eines Elementes der 3. bis 8. Nebengruppe und zumindest eines Elementes der 3. bis 5. Hauptgruppe mit zumindest einem der Elemente Te, Se, S, O, Sb, As, P, N, Ge, Si, C, Ga, Al oder B oder eine Mischung dieser Verbindungen auf. Besonders bevorzugt weist die anorganische Komponente zumindest eine Verbindung zumindest eines der Elemente Sc, Y, Ti, Zr, V, Nb, Cr, Mo, W, Mn, Fe, Co, B, Al, Ga, In, Tl, Si, Ge, Sn, Pb, Sb oder Bi mit zumindest einem der Elemente Te, Se, S, O, Sb, As, P, N, C, Si, Ge oder Ga, wie z. B. TiO₂, Al₂O₃, SiO₂, ZrO₂, Y₂O₃, BC, SiC, Fe₃O₄, SiN, SiP, Nitride, Sulfate, Phosphide, Silicide, Spinelle oder Yttriumaluminiumgranat, oder eines dieser Elemente selbst auf. Die anorganische Komponente kann auch Alumosilicate, Aluminiumphospate, Zeolithe oder partiell ausgetauschte Zeolithe, wie z. B. ZSM-5, Na-ZSM-5 oder Fe-ZSM-5 oder amorphe mikroporöse Mischoxide, die bis zu 20 % nicht hydrolysierbare organische Verbindungen enthalten können, wie z. B. Vanadinoxid-Siliziumoxid-Glas oder Aluminiumoxid-Siliciumoxid-Methylsiliciumsesquioxid-Gläser, aufweisen.

Vorzugsweise liegt zumindest eine anorganische Komponente in einer Korngrößenfraktion mit einer Korngröße von 1 bis 250 nm oder mit einer Korngröße von 260 bis 10 000 nm vor.

Es kann vorteilhaft sein, wenn der erfindungsgemäße Verbundwerkstoff zumindest zwei Korngrößenfraktionen zumindest einer anorganischen Komponente aufweist. Ebenso kann es vorteilhaft sein, wenn der erfindungsgemäße Verbundwerkstoff zumindest zwei Korngrößenfraktionen von zumindest zwei anorganischen Komponenten aufweist. Das Korngrößenverhältnis kann von 1 : 1 bis 1 : 10 000, vorzugsweise von 1:1 bis 1:100 betragen. Das Mengenverhältnis der Korngrößenfraktionen im Verbundwerkstoff kann vorzugsweise von 0,01:1 bis 1 : 0,01 betragen.

Die Stoffdurchlässigkeit des erfindungsgemäßen Verbundwerkstoffes wird durch die Korngröße der verwendeten zumindest einen anorganischen Komponente auf Teilchen mit einer bestimmten maximalen Größe begrenzt.

Der erfindungsgemäße Verbundwerkstoff zeichnet sich dadurch aus, dass er zumindest ein anorganisches und/oder organisches Material aufweist, das Oberflächenladungen trägt. Dieses Material kann als Beimischung im Gefüge des Verbundwerkstoffes enthalten sein. Es kann aber ebenso vorteilhaft sein, wenn die inneren und/oder äußeren Oberflächen der im Verbundwerkstoff vorhandenen Partikel mit einer Schicht aus einem Oberflächenladungen tragenden organischen und/oder anorganischen Material überzogen sind.

Solche Schichten weisen eine Dicke von 0,0001 bis 1 µm, vorzugsweise eine Dicke von 0,001 bis 0,05 µm, auf.

In einer besonderen Ausführungsart des erfindungsgemäßen Verbundwerkstoffes ist zumindest ein anorganisches und/oder organisches Material, welches Oberflächenladungen trägt, in den Zwischenkornvolumen des Verbundwerkstoffes vorhanden. Dieses Material füllt das Zwischenkornvolumen ganz oder teilweise, vorzugsweise teilweise aus.

Die Oberflächen der anorganischen und/oder organischen Materialien weisen ionische Gruppen auf, an denen zumindest eine Polyelektrolytschicht adsorbiert werden kann.

Es kann vorteilhaft sein, wenn das Oberflächenladungen tragende Material ionische Gruppen aus der Gruppe der Alkylsulfonsäure-, Sulfonsäure-, Phosphorsäure-, Alkylphosphonsäure-, Dialkylphosphinsäure-, Carbonsäure-, tetra-Organylammonium-, Organylsulfonium-, Organylphosphonium-, tetra-Organylphosphoniumgruppen oder Gemische dieser Gruppen gleicher Ladung aufweist. Diese ionischen Gruppen können chemisch und/oder physikalisch an anorganische Partikel gebundene organische Verbindungen sein. Vorzugsweise werden die ionischen Gruppen über Aryl- und/oder Alkylketten mit der inneren und/oder äußeren Oberfläche der im Verbundwerkstoff vorhandenen Partikel verbunden.

Das Oberflächenladungen tragende Material im Verbundwerkstoff kann ein organisches Material, wie z. B. ein Polymer sein. Bevorzugt sind Polymere, die stark basische oder stark saure funktionale Gruppen aufweisen. Besonders bevorzugt handelt es sich bei diesem Polymer um ein sulfoniertes Polytetrafluorethylen, ein sulfoniertes Polyvinylidenfluorid, ein aminolysiertes Polytetrafluorethylen, ein aminolysiertes Polyvinylidenfluorid, ein sulfoniertes Polysulfon, ein aminolysiertes Polysulfon, ein sulfoniertes Polyetherimid, ein aminolysiertes Polyetherimid oder ein Gemisch aus diesen Polymeren.

Als anorganisches Oberflächenladungen tragendes Material kann im Verbundwerkstoff zumindest eine Verbindung aus der Gruppe der Oxide, Phosphate, Phosphite, Phosphonate, Sulfate, Sulfonate, Vanadate, Stannate, Plumbate, Chromate, Wolframate, Molybdate, Manganate, Titanate, Silikate, Alumosilikate und Aluminate oder Gemische dieser Verbindungen zumindest eines der Elemente Al, K, Na, Ti, Fe, Zr, Y, Va, W, Mo, Ca, Mg, Li, Cr, Mn, Co, Ni, Cu oder Zn oder Gemische dieser Elemente vorhanden sein.

Als anorganisches Oberflächenladungen tragendes Material kann aber auch zumindest eine teilhydrolysierte Verbindung aus der Gruppe der Oxide, Phosphate, Phosphite, Phosphonate, Sulfate, Sulfonate, Vanadate, Stannate, Plumbate, Chromate, Wolframate, Molybdate, Manganate, Titanate, Silikate, Alumosilikate und Aluminate oder Gemische dieser Verbindungen zumindest eines der Elemente Al, K, Na, Ti, Fe, Zr, Y, Va, W, Mo, Ca, Mg, Li, Cr, Mn, Co, Ni, Cu oder Zn oder ein Gemisch dieser Elemente vorhanden sein. Vorzugsweise ist als anorganisches Oberflächenladungen tragendes Material zumindest eine teilweise nicht hydrolysierbare Gruppen tragende amorphe und/oder kristalline Verbindung zumindest eines der Elemente Zr, Si, Ti, Al, Y oder Vanadium oder Gemische dieser Elemente oder Verbindungen, im erfindungsgemäßen Verbundwerkstoff vorhanden.

Die auf den inneren und/oder äußeren Oberflächen des erfindungsgemäßen Verbundwerkstoff vorhandene Polyelektrolytschicht bzw. -beschichtung weist Polyelektrolyte, die negative und/oder positive Ladungen tragen, auf. Vorzugsweise weist die Polyelektrolytschicht alternierend anionische und kationische oder kationische und anionische Polyelektrolyte auf.

Es kann auch vorteilhaft sein, wenn die Polyelektrolytschicht zumindest einen Polyelektrolyten aufweist, welcher anionische und kationische Eigenschaften aufweist. Ein solcher Polyelektrolyt, welcher anionische und kationische Eigenschaften aufweist, kann z. B. Polyalphaaminoacrylsäure sein.

Vorzugsweise weist die Polyelektrolytschicht zumindest einen Polyelektrolyt aus einer Gruppe, die Polyallylaminhydrochlorid, Polyethylenimin, Polyvinylamin, Polyvinylsulfat-Kaliumsalz, Polystyrolsulfonat-Natriumsalz und Polyacrylamido-2-methyl-1-propansulfonsäure umfasst, auf.

Ganz besonders bevorzugt weist die Polyelektrolytschicht ein Verhältnis von Kohlenstoffatomen zu möglichen Ionenpaarbindungen von 2 zu 1 bis 20:1, vorzugsweise von 4 zu 1 bis 8 zu 1, aufweisen. So weist z. B. ein Polyvinylkomplex aus Polyvinylsulfat und Polyvinylamin ein Verhältnis von 4 auf. Heteroatome, die wie z. B. das Silizium in siliziumorganischen Verbindungen, ein Kohlenstoffatome ersetzen, werden bei der Verhältnisbildung wie Kohlenstoffatome behandelt.

Der erfindungsgemäße Verbundwerkstoff kann flexibel sein. Vorzugsweise ist der polyelektrolytbeschichete Verbundwerkstoff bis zu einem kleinsten Radius von 5 mm, besonders bevorzugt bis zu einem kleinsten Radius von 1 mm biegbar.

Das erfindungsgemäße Verfahren zur Herstellung eines Verbundwerkstoffes, der auf den inneren und/oder äußeren Oberflächen eine Polyelektrolytschicht trägt, wird im folgenden beispielhaft beschrieben, ohne dass das erfindungsgemäße Verfahren auf diese Herstellung beschränkt sein soll.

Das erfindungsgemäße Verfahren zur Herstellung eines Verbundwerkstoffes gemäß zumindest einem der Ansprüche 1 bis 24 zeichnet sich dadurch aus, dass ein Oberflächenladungen aufweisender Verbundwerkstoff auf Basis zumindest eines durchbrochenen und stoffdurchlässigen Trägers, der auf zumindest einer Seite des Trägers und/oder im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7.

Hauptgruppe des Periodensystems aufweist, zumindest einmal mit einem Polyelektrolyten beschichtet wird.

Der Oberflächenladungen aufweisende Verbundwerkstoff ist auf verschiedene Weisen erhältlich. Zum einen können bei der Herstellung des Verbundwerkstoffes Oberflächenladungen tragende Materialien oder Materialien, die nach einer weiteren Behandlung Oberflächenladungen tragen, eingesetzt werden. Zum anderen können schon vorhandene stoffdurchlässige Verbundwerkstoffe mit Oberflächenladungen tragenden Materialien oder mit Materialien, die nach einer weiteren Behandlung Oberflächenladungen tragen, behandelt werden.

Die Herstellung eines Verbundwerkstoffes, der Oberflächenladungen aufweist, kann mittels eines Verfahrens zur Herstellung eines Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, erfolgen. Dieses Herstellungsverfahren wird in PCT/EP98/05939 ausführlich beschrieben.

Bei diesem Verfahren zur Herstellung des Verbundwerkstoffes wird in und auf zumindest einen durchbrochenen und stoffdurchlässigen Träger, zumindest eine Suspension gebracht, die zumindest eine anorganische Komponente, aus zumindest einer Verbindung zumindest eines Metalls, eines Halbmetalls oder eines Mischmetalls mit zumindest einem der Elemente der 3. bis 7. Hauptgruppe, aufweist und durch zumindest einmaliges Erwärmen wird die Suspension auf oder im oder auf und im Trägermaterial verfestigt.

Bei diesem Verfahren kann es vorteilhaft sein, die Suspension auf und in oder aber auf oder in zumindest einen Träger durch Aufdrucken, Aufpressen, Einpressen Aufrollen, Aufrakeln, Aufstreichen, Tauchen, Spritzen oder Aufgießen zu bringen.

Der durchbrochene und stoffdurchlässige Träger, auf den oder in den oder aber auf den und in den zumindest eine Suspension gebracht wird, kann zumindest ein Material, ausgewählt aus Kohlenstoff, Metallen, Legierungen, Keramiken, Mineralien, Kunststoffen, amorphen Substanzen, Naturprodukten, Verbundstoffen, Verbundwerkstoffen oder aus zumindest einer Kombination dieser Materialien aufweisen. Als stoffdurchlässige Träger können auch solche verwendet werden, die durch Behandlung mit Laserstrahlen oder Ionenstrahlen stoffdurchlässig gemacht wurden. Vorzugsweise werden als Träger Gewebe aus Fasern oder Drähten der oben angegeben Materialien, wie z. B. Metallgewebe oder Kunststoffgewebe verwendet.

Die verwendete Suspension, die zumindest eine anorganische Komponente und zumindest ein Metalloxidsol, zumindest ein Halbmetalloxidsol oder zumindest ein Mischmetalloxidsol oder eine Mischung dieser Sole aufweisen kann, kann durch Suspendieren zumindest einer anorganischen Komponente in zumindest einem dieser Sole hergestellt werden.

Die Sole werden durch Hydrolysieren zumindest einer Verbindung, vorzugsweise zumindest einer Metallverbindung, zumindest einer Halbmetallverbindung oder zumindest einer Mischmetallverbindung mit zumindest einer Flüssigkeit, einem Feststoff oder einem Gas erhalten, wobei es vorteilhaft sein kann, wenn als Flüssigkeit z. B. Wasser, Alkohol oder eine Säure, als Feststoff Eis oder als Gas Wasserdampf oder zumindest eine Kombination dieser Flüssigkeiten, Feststoffe oder Gase eingesetzt wird. Ebenso kann es vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung, ein Metallnitrat, ein Metallchlorid, ein Metallcarbonat oder zumindest eine Halbmetallalkoholatverbindung ausgewählt aus den Verbindungen der Elemente Ti, Zr, Al, Si, Sn, Ce und Y oder der Lanthanoiden und Actinoiden, wie z. B. Titanalkoholate, wie z. B. Titanisopropylat, Siliziumalkoholate, Zirkoniumalkoholate, oder ein Metallnitrat, wie z. B. Zirkoniumnitrat, hydrolysiert.

Es kann vorteilhaft sein, die Hydrolyse der zu hydrolysierenden Verbindungen mit zumindest dem halben Molverhältnis Wasser, Wasserdampf oder Eis, bezogen auf die hydrolysierbare Gruppe der hydrolysierbaren Verbindung, durchzuführen.

Die hydrolysierte Verbindung kann zum Peptisieren mit zumindest einer organischen oder anorganischen Säure, vorzugsweise mit einer 10 bis 60 %igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

Es können nicht nur Sole verwendet werden, die wie oben beschrieben hergestellt wurden, sondern auch handelsübliche Sole, wie z. B. Titannitratsol, Zirkonnitratsol oder Silicasol.

Es kann vorteilhaft sein, wenn zumindest eine anorganische Komponente, welche eine Komgöße von 1 bis 10 000 nm aufweist, in zumindest einem Sol suspendiert wird. Vorzugsweise wird eine anorganische Komponente, die zumindest eine Verbindung, ausgewählt aus Metallverbindungen, Halbmetallverbindungen, Mischmetallverbindungen und Metallmischverbindungen mit zumindest einem der Elemente der 3. bis 7. Hauptgruppe, oder zumindest eine Mischung dieser Verbindungen aufweist, suspendiert. Besonders bevorzugt wird zumindest eine anorganische Komponente, die zumindest eine Verbindung aus den Oxiden der Nebengruppenelemente oder den Elementen der 3. bis 5. Hauptgruppe, vorzugsweise Oxide ausgewählt aus den Oxiden der Elemente Sc, Y, Ti, Zr, Nb, Ce, V, Cr, Mo, W, Mn, Fe, Co, B, Al, In, Tl, Si, Ge, Sn, Pb und Bi, wie z. B. Y₂O₃, ZrO₂, Fe₂O₃, Fe₃O₄, SiO₂, Al₂O₃ aufweist, suspendiert. Die anorganische Komponente kann auch Alumosilicate, Aluminiumphospate, Zeolithe oder partiell ausgetauschte Zeolithe, wie z. B. ZSM-5, Na-ZSM-5 oder Fe-ZSM-5 oder amorphe mikroporöse Mischoxide, die bis zu 20 % nicht hydrolysierbare organische Verbindungen enthalten können, wie z. B. Vanadinoxid-Siliziumoxid-Glas oder Aluminiumoxid-Siliciumoxid-Methylsiliciumsesquioxid-Gläser, aufweisen.

Vorzugsweise beträgt der Massenanteil der suspendierten Komponente das 0,1 bis 500-fache der eingesetzten hydrolysierten Verbindung.

Durch die geeignete Wahl der Korngröße der suspendierten Verbindungen in Abhängigkeit von der Größe der Poren, Löcher oder Zwischenräume des durchbrochenen stoffdurchlässigen Trägers, aber auch durch die Schichtdicke des erfindungsgemäßen Verbundwerkstoffes sowie das anteilige Verhältnis Sol-Lösungsmittel-Metalloxid lässt sich die Rissfreiheit im Verbundwerkstoff optimieren.

Bei der Verwendung eines Maschengewebes mit einer Maschenweite von z. B. 100 µm können zur Erhöhung der Rissfreiheit vorzugsweise Suspensionen verwendet werden, die eine suspendierte Verbindung mit einer Korngröße von mindestens 0,7 µm aufweist. Im allgemeinen sollte das Verhältnis Korngröße zu Maschen- bzw. Porengröße von 1:1000 bis 50:1000 betragen. Der erfindungsgemäße Verbundwerkstoff kann vorzugsweise eine Dicke von 5 bis 1 000 µm, besonders bevorzugt von 50 bis 150 µm, aufweisen. Die Suspension aus Sol und zu suspendierenden Verbindungen weist vorzugsweise ein Verhältnis Sol zu suspendierenden Verbindungen von 0,1:100 bis 100:0,1, vorzugsweise von 0,1 : 10 bis 10 : 0,1 Gewichtsteilen auf.

Die auf oder im oder aber auf und im Träger vorhandene Suspension kann durch Erwärmen dieses Verbundes auf 50 bis 1 000 °C verfestigt werden. In einer besonderen Ausführungsvariante des Verfahrens wird dieser Verbund für 10 min. bis 5 Stunden einer Temperatur von 50 bis 100 °C ausgesetzt. In einer weiteren besonderen Ausführungsart des erfindungsgemäßen Verfahrens wird dieser Verbund für 1 Sekunde bis 10 Minuten einer Temperatur von 100 bis 800 °C, besonders bevorzugt fr 30 Sekunden bis 4 Minuten einer Temperatur von 350 bis 600 °C ausgesetzt.

Das Erwärmen des Verbundes kann mittels erwärmter Luft, Heißluft, Infrarotstrahlung, Mikrowellenstrahlung oder elektrisch erzeugter Wärme, erfolgen. In einer besonderen Ausführungsart des erfindungsgemäßen Verfahrens kann es vorteilhaft sein, wenn das Erwärmen des Verbundes unter Nutzung des Trägermaterials als elektrische Widerstandheizung erfolgt. Zu diesem Zweck kann über zumindest zwei Kontakte der Träger an eine Stromquelle angeschlossen werden. Je nach Stärke der Stromquelle und Höhe der abgegebenen Spannung heizt sich der Träger bei eingeschaltetem Strom auf und die in und auf seiner Oberfläche vorhandene Suspension kann durch diese Erwärmung verfestigt werden.

In einer weiteren besonders bevorzugten Ausführungsart des Verfahrens kann das Verfestigen der Suspension dadurch erreicht werden, dass die Suspension auf oder in oder aber auf und in einen vorgewärmten Träger gebracht wird und somit direkt nach dem Aufbringen verfestigt wird.

Erfindungsgemäß kann der Oberflächenladungen aufweisende Verbundwerkstoff durch Einsatz zumindest einer polymergebundenen Brönstedtsäure oder -base bei der beschriebenen Herstellung des Verbundwerkstoffes erhalten werden. Vorzugsweise kann der Oberflächenladungen aufweisende Verbundwerkstoff durch Einsatz zumindest eines Sols, das Festladungen tragende Polymerpartikel oder Polyelektrolytlösungen umfasst, erhalten werden. Es kann vorteilhaft sein, wenn die Festladungen tragenden Polymeren oder Polyelektrolyten einen Schmelz- oder Erweichungspunkt unterhalb von 500 °C aufweisen. Vorzugsweise werden als Festladungen tragende Polymeren oder Polyelektrolyte sulfoniertes Polytetrafluorethylen, sulfoniertes Polyvinylidenfluorid, aminolysiertes Polytetrafluorethylen, aminolysiertes Polyvinylidenfluorid, sulfoniertes Polysulfon, aminolysiertes Polysulfon, sulfoniertes Polyetherimid, aminolysiertes Polyetherimid oder ein Gemisch aus diesen verwendet. Der Anteil der Festladungen tragenden Polymeren oder der Polyelektrolyten im eingesetzten Sol beträgt vorzugsweise von 0,001 Gew.-% bis 50,0 Gew.-%, besonders bevorzugt von 0,01 Gew.-% bis 25 Gew.-%. Während der Herstellung und Bearbeitung des ionenleitenden Verbundwerkstoffes kann das Polymer sich chemisch und physikalisch oder chemisch oder physikalisch verändern.

Der Oberflächenladungen aufweisende Verbundwerkstoff kann auch durch Einsatz eines Sols, welches zumindest ein Oberflächenladungen tragendes Material oder zumindest ein Material aufweist, welches nach einer weiteren Behandlung Oberflächenladungen trägt, bei der Herstellung des Verbundwerkstoffes erhalten werden. Vorzugsweise werden dem Sol Materialien zugesetzt, die zur Bildung von anorganischen Oberflächenladungen tragenden Schichten auf den inneren und/oder äußeren Oberflächen der im Verbundwerkstoff enthaltenen Partikel führen.

Erfindungsgemäß kann das Sol durch Hydrolysieren zumindest einer Metallverbindung, zumindest einer Halbmetallverbindung oder zumindest einer Mischmetallverbindung oder eine Kombination dieser Verbindungen mit einer Flüssigkeit, einem Gas und/oder einem Feststoff erhalten werden. Als Flüssigkeit, Gas und/oder Feststoff zur Hydrolyse wird vorzugsweise Wasser, Wasserdampf, Eis, Alkohol oder Säure oder eine Kombination dieser Verbindungen eingesetzt. Es kann vorteilhaft sein, die zu hydrolysierende Verbindung vor der Hydrolyse in Alkohol und/oder in eine Säure zu geben. Vorzugsweise wird zumindest ein Nitrat, Chlorid, Carbonat oder ein Alkoholat eines Metalls oder Halbmetalls hydrolysiert. Ganz besonders bevorzugt ist das zu hydrolysierende Nitrat, Chlorid, Carbonat, oder Alkoholat eine Verbindung der Elemente Ti, Zr, V, Mn, W, Mo, Cr, Al, Si, Sn und/oder Y.

Es kann vorteilhaft sein, wenn eine zu hydrolysierende Verbindung nicht hydrolysierbare Gruppen neben hydrolysierbaren Gruppen trägt. Vorzugsweise wird als eine solche zu hydrolysierende Verbindung eine Alkyl-trialkoxi- oder Dialkyldialkoxi- oder Trialkyl-alkoxi-verbindung der Elements Silizium verwendet.

Erfindungsgemäß kann dem Sol zur Herstellung des Verbundwerkstoffes zumindest eine in Wasser und/oder Alkohol lösliche Säure oder Base zugegeben werden. Vorzugsweise wird eine Säure oder Base der Elemente Na, Mg, K, Ca, V, Y, Ti, Cr, W, Mo, Zr, Mn, Al, Si, P oder S zugegeben.

Das Sol, welches zur erfindungsgemäßen Herstellung des Oberflächenladungen aufweisenden Verbundwerkstoffes eingesetzt wird, kann auch nicht stöchiometrische Metall-, Halbmetall- oder Nichtmetalloxide beziehungsweise Hydroxide umfassen, die durch Änderung der Oxidationsstufe des entsprechenden Elements erzeugt wurden. Die Änderung der Oxidationsstufe kann durch Reaktion mit organischen Verbindungen oder anorganische Verbindungen oder durch elektrochemische Reaktionen erfolgen. Vorzugsweise erfolgt die Änderung der Oxidationsstufe durch Reaktion mit einem Alkohol, Aldehyd, Zucker, Ether, Olefin, Peroxid oder Metallsalz. Verbindungen die auf diese Weise die Oxidationsstufe ändern können z. B. Cr, Mn, V, Ti, Sn, Fe, Mo, W oder Pb sein.

Erfindungsgemäß kann es vorteilhaft sein, wenn dem Sol Substanzen zugesetzt werden, die zur Bildung von anorganischen Oberflächenladungen aufweisenden Strukturen führen. Solche Substanzen können z. B. Zeolith- und/oder β-Alumosilikatpartikel sein.

Auf diese Weise lässt sich z. B. ein fast ausschließlich aus anorganischen Stoffen aufgebauter Oberflächenladungen aufweisender stoffdurchlässiger Verbundwerkstoff erfindungsgemäß herstellen. Hierbei muss größerer Wert auf die Zusammensetzung des Sols gelegt werden, da ein Gemisch aus verschiedenen hydrolysierbaren Komponenten eingesetzt werden muss. Diese einzelnen Komponenten müssen sorgfältig gemäß ihrer Hydrolysegeschwindigkeit aufeinander abgestimmt werden. Es ist auch möglich, die nicht stöchiometrischen Metalloxidhydrat-Sole durch entsprechende Redoxreaktionen zu erzeugen. Recht gut sind auf diesem Wege die Metalloxidhydrate der Elemente Cr, Mn, V, Ti, Sn, Fe, Mo, W oder Pb zugänglich. Die Oberflächenladungen tragenden Verbindung an den inneren und äußeren Oberflächen sind dann verschiedene teilweise hydrolysierte oder nicht hydrolysierte Oxide, Phosphate, Phosphite, Phosphonate, Stannate, Plumbate, Chromate, Sulfate, Sulfonate, Vanadate, Wolframate, Molybdate, Manganate, Titanate, Silikate oder Gemische dieser der Elemente Al, K, Na, Ti, Fe, Zr, Y, Va, W, Mo, Ca, Mg, Li, Cr, Mn, Co, Ni, Cu oder Zn oder Gemische dieser Elemente.

In einer weiteren bevorzugten Ausführungsart des erfindungsgemäßen Verfahrens können schon vorhandene stoffdurchlässige Oberflächenladungen aufweisende oder nicht aufweisende Verbundwerkstoffe mit Oberflächenladungen aufweisenden Materialien oder mit Materialien, die nach einer weiteren Behandlung Oberflächenladungen tragen, behandelt werden. Solche Verbundwerkstoffe können handelsübliche stoffdurchlässige Werkstoffe oder Verbundwerkstoffe sein oder aber Verbundwerkstoffe, wie sie z. B. in PCT/EP98/05939 beschrieben werden. Es ist aber auch möglich Verbundwerkstoffe einzusetzen, die nach dem oben beschriebenen Verfahren erhalten wurden.

Erfindungsgemäß werden Oberflächenladungen aufweisende stoffdurchlässige Verbundwerkstoff durch Behandlung eines Verbundwerkstoffes, der eine Porenweite von 0,001 bis 5 µm und keine oder eine zu geringe Anzahl an Oberflächenladungen aufweist, mit zumindest einem Oberflächenladungen tragenden Material oder mit zumindest einem Material, welches nach einer weiteren Behandlung Oberflächenladungen trägt, erhalten.

Die Behandlung des Verbundwerkstoffes mit zumindest einem Oberflächenladungen tragenden Material oder zumindest einem Material, welches nach einer weiteren Behandlung Oberflächenladungen trägt, kann durch Tränken, Tauchen, Bestreichen, Aufwalzen, Aufrakeln, Besprühen oder andere Beschichtungstechniken erfolgen. Der Verbundwerkstoff wird nach der Behandlung mit zumindest einem Oberflächenladungen tragenden Material oder zumindest einem Material, welches nach einer weiteren Behandlung Oberflächenladungen trägt, vorzugsweise thermisch behandelt. Besonders bevorzugt erfolgt die thermische Behandlung bei einer Temperatur von 100 bis 700 °C.

Vorzugsweise wird das Oberflächenladungen tragende Material oder das Material, welches nach einer weiteren Behandlung Oberflächenladungen trägt, in Form einer Lösung mit einem Lösungsmittelanteil von 1 bis 99 % auf den Verbundwerkstoff aufgebracht. Erfindungsgemäß können als Material zur Herstellung des Oberflächenladungen aufweisenden Verbundwerkstoffs Polyorganylsiloxane, die zumindest einen ionischen Bestandteil aufweisen, eingesetzt werden. Die Polyorganylsiloxane können unter anderem Polyalkyl- und/oder Polyarylsiloxane und/oder weitere Bestandteile umfassen.

Es kann vorteilhaft sein, wenn als Material zur Herstellung des Oberflächenladungen aufweisenden Verbundwerkstoffs zumindest eine Brönstedtsäure oder -base eingesetzt wird. Ebenso kann es vorteilhaft sein, wenn als Material zur Herstellung des Oberflächenladungen aufweisenden Verbundwerkstoffs zumindest eine saure und/oder basische Gruppen enthaltende Trialkoxysilanlösung oder -suspension eingesetzt wird. Vorzugsweise ist zumindest eine der sauren oder basischen Gruppen eine quartäre Ammonium-, Phosphonium-, Alkylsulfonsäure-, Carbonsäure- oder Phosphonsäuregruppe.

So kann man mit Hilfe des erfindungsgemäßen Verfahrens z. B. einen bereits bestehenden stoffdurchlässigen Verbundwerkstoff nachträglich durch die Behandlung mit einem Silan Oberflächenladungen aufweisend ausstatten. Dazu wird eine 1-20 %ige Lösung dieses Silans in einer Wasser enthaltenden Lösung angesetzt und der Verbundwerkstoff wird hierin getaucht. Als Lösungsmittel können aromatische und aliphatische Alkohole, aromatische und aliphatische Kohlenwasserstoffe und andere gängige Lösemittel oder Gemische verwendet werden. Vorteilhaft ist der Einsatz von Ethanol, Octanol, Toluol, Hexan, Cylohexan und Octan. Nach Abtropfen der anhaftenden Flüssigkeit wird der getränkte Verbundwerkstoff bei ca. 150 °C getrocknet und kann entweder direkt oder nach mehrmaliger nachfolgender Beschichtung und Trocknung bei 150 °C als Oberflächenladungen aufweisender, stoffdurchlässiger Verbundwerkstoff genutzt werden. Hierzu eigenen sich sowohl kationische als auch anionische Gruppen tragende Silane.

Es kann weiterhin vorteilhaft sein, wenn die Lösung oder Suspension zur Behandlung des Verbundwerkstoffs neben einem Trialkoxysilan auch saure oder basische Verbindungen und Wasser umfasst. Vorzugsweise umfassen die sauren oder basischen Verbindungen zumindest eine dem Fachmann bekannte Brönstedt- oder Lewissäure oder -base.

Erfindungsgemäß kann der Verbundwerkstoff aber auch mit Lösungen, Suspensionen oder Solen behandelt werden, die zumindest ein Oberflächenladungen tragendes Material aufweisen. Diese Behandlung kann einmal vorgenommen werden oder mehrfach wiederholt werden. Mit dieser Ausführungsart des erfindungsgemäßen Verfahrens erhält man Schichten von einem oder mehreren gleichen oder verschiedenen teilweise hydrolysierten oder nicht hydrolysierten Oxiden, Phosphaten, Phosphiten, Phosphonaten, Sulfaten, Sulfonaten, Vanadaten, Wolframaten, Molybdaten, Manganaten, Titanaten, Silikaten oder Gemische dieser der Elemente Al, K, Na, Ti, Fe, Zr, Y, Va, W, Mo, Ca, Mg, Li, Cr, Mn, Co, Ni, Cu oder Zn oder Gemische dieser Elemente.

Die Oberflächenladungen aufweisenden Verbundwerkstoffe, die erfindungsgemäß durch Verwendung von Oberflächenladungen tragenden Materialien oder Materialien, die nach einer weiteren Behandlung Oberflächenladungen tragen, bei der Herstellung des Verbundwerkstoffes oder durch nachträgliche Behandlung eines Verbundwerkstoffes mit Oberflächenladungen tragenden Materialien oder Materialien, die nach einer weiteren Behandlung Oberflächenladungen tragen, erhalten wurden, werden erfindungsgemäß von 1 bis 500 mal, vorzugsweise von 20 bis 100 mal mit zumindest einem Polyelektrolyten beschichtet.

Das Aufbringen der Polyelektrolyte kann durch Aufsprühen, Aufrakeln, Aufwalzen und/oder Tauchen oder ähnliche Prozesse erfolgen. Vorzugsweise liegen die Polyelektrolyte, welche aufgebracht werden sollen, in einer Lösung vor. Vorzugsweise weisen diese Lösungen von 0,001 bis 2,0 monomol/l, besonders bevorzugt 0,005 bis 0,5 monomol/l des jeweiligen Polyelektrolyten auf. Als Lösungsmittel eignen sich Säuren, vorzugsweise verdünnte Mineralsäuren und ganz besonders bevorzugt verdünnte Salzsäure. Vorzugsweise weisen die Lösungen den jeweiligen Polyelektrolyten in einer Konzentration von 0,01 monomol/l in einer verdünnten Salzsäure, die einen pH-Wert von ca. 1,7 aufweist, auf. Es kann für das Aufbringen von Vorteil sein, den Polyelektrolytlösungen Elektrolyte, wie z. B. NaCl, NaClO₄ oder KCl, zuzusetzen. Als Elektrolyte können 1 : 1, 1 : 2 oder 2 : 1 Elektrolyte, wie z. B. KCl, MgCl₂, K₂SO₄, verwendet werden. Die Ionenstärke der verwendeten Elektrolyte in der Polyelektrolytlösung beträgt vorzugsweise von 0,02 bis 10.

Vorzugsweise wird der erfindungsgemäße Verbundwerkstoff dadurch hergestellt, dass ein Oberflächenladungen aufweisender Verbundwerkstoff alternierend mit zumindest einem anionischen Polyelektrolyten und zumindest einem kationischen Polyelektrolyten beschichtet wird. Sind die verwendeten Polyelektrolyten, also das Polyanion und Polykation bei jedem Tauchgang gleich, erhält man Schichten mit dem Aufbau ABABAB etc. Durch Variation der Polyanionen und/oder der Polykationen bei den Tauchvorgängen können Schichten mit einem Aufbau ABCDABCD oder auch mit unregelmäßigem Aufbau erhalten werden.

Vorzugsweise erfolgt das Aufbringen der Polyelektrolyte durch einen einfachen Tauchprozess. Vorzugsweise wird der erfindungsgemäße Verbundwerkstoff dadurch hergestellt, dass ein Oberflächenladungen aufweisender Verbundwerkstoff alternierend mit zumindest einem anionischen Polyelektrolyten und zumindest einem kationischen Polyelektrolyten beschichtet wird. Dazu wird der Oberflächenladungen aufweisende Verbundwerkstoff abwechselnd in Lösungen kationischer und anionischer Polyelektrolyte getaucht. Beim ersten Tauchprozess muss es zur Ausbildung einer ersten Lage kommen, auf der sich eine folgende Lage adsorbieren lässt.

Ist die Oberfläche des Verbundwerkstoffes mit negativen Ladungen ausgerüstet, so erfolgt der erste Tauchprozess der Beschichtungssequenz in eine Lösung mit einem kationischen Polyelektrolyten, ist die Oberfläche des Verbundwerkstoffes mit positiven Ladungen ausgerüstet, so erfolgt der erste Tauchprozess der Beschichtungssequenz in eine Lösung mit einem anionischen Polyelektrolyten.

Erfolgt das Aufbringen der Polyelektrolyten durch einen Tauchprozess, so kann es vorteilhaft sein, den zu beschichtenden Oberflächenladungen aufweisenden Verbundwerkstoff für ca. eine halbe Stunde in der Polyelektrolytlösung zu belassen. Nach dieser Tauchzeit wird der Verbundwerkstoff vorzugsweise zumindest zweimal mit Wasser gewaschen, bevor ein nächster Tauchprozess erfolgt.

Bei jedem der folgenden Tauchschritte kommt es zur Abscheidung einer nahezu monomolekularen Lage des jeweiligen Polyelektrolyten auf der entgegengesetzt geladenen Oberfläche. Die Konformation des abgeschiedenen Polyelektrolyten hängt stark davon ab, ob der Polyelektrolytlösung niedermolekulare Salze, wie z. B. NaCl als Elektrolyten zugesetzt werden. Ohne Elektrolytzusatz werden die Polyelektrolyte in einer annähernd gestreckten, mit Elektrolytzusatz in einer geknäulten Konformation abgeschieden. Durch das Abscheiden von Polyelektrolyten in der geknäulten Konformation, können dickere Polyelektrolytschichten erhalten werden. Die Dicke der abgeschiedenen Schicht ist daher bei Elektrolytzusatz deutlich größer als ohne. Die Bindung zwischen den Polyelektrolyten ist ausschließlich auf physikalische Wechselwirkungen zwischen den Polyelektrolyten zurückzuführen. Die bei weitem stärkste anziehende Kraft ist die Wechselwirkung zwischen den unterschiedlich geladenen ionischen Gruppen der Polyelektrolyte. Wichtigste Einflussgröße auf die Pervaporationsleistung bei Polyelektrolytmembranen ist die Ladungsdichte, dass heißt die Anzahl der C-Atome pro Ladung ist. Vorzugsweise werden Polyelektrolyte für das erfindungsgemäße Verfahren verwendet, bei denen die erhaltene Polyelektrolytschicht ein Verhältnis von Kohlenstoffatomen zu möglichen Ionenpaarbindungen von 2 zu 1 bis 20 zu 1, vorzugsweise von 4 zu 1 bis 8 zu 1, aufweist, wobei in siliziumorganische Polyelektrolyte aufweisenden Polyelektrolytschichten Siliziumatome wie Kohlenstoffatome gezählt werden.

Als Polyelektrolyte zur Herstellung des erfindungsgemäßen Verbundwerkstoffes werden vorzugsweise Polyelektrolyte wie z. B. Poly(allylaminhydrochlorid), Poly(ethylenimin), Polyvinylamin, Polyvinylsulfat-Kaliumsalz, Poly(2-acrylamido-2-methyl-1-propansulfonsäure), Polyacrylsäure, Cellulosesulfat-Kaliumsalz, Chitosan, Poly(4-vinylpyridin), Poly(styrolsulfonat)-Natriumsalz, Dextransulfat-Natriumsalz verwendet.

Als kationische Polyelektrolyte können insbesondere Polyallylaminhydrochlorid, Polyethylenimin und/oder Polyvinylamin zum Beschichten verwendet werden. Als anionische Polyelektrolyte werden bevorzugt Polyacrylamido-2-methyl-1-propansulfonsäure und/oder Polyvinylsulfat-Kaliumsalz verwendet.

Die erfindungsgemäßen polyelektrolytbeschichteten stoffdurchlässigen Verbundwerkstoffe gemäß einem der Ansprüche 1 bis 14 sind sehr gut zum Einsatz in der Stofftrennung durch Pervaporation und Dampfpermeation geeignet. Besonders bevorzugt können die erfindungsgemäßen Verbundwerkstoffe als Membranen bei der Pervaporation verwendet werden.

Von besonderer Bedeutung ist die Trennung von Wasser und Ethanol durch Pervaporation. Durch Einsatz des erfindungsgemäßen Verbundwerkstoffes als Membran lässt sich z. B. Wasser aus Ethanol mit einem Trennfaktor von bis zu 500 bei einer Flussleistung durch die Membran von bis zu 11 000 g/m²h und einer Temperatur von ca. 80 °C und einer Druckdifferenz von ca. 1bar abtrennen. Der Wassergehalt des Zulaufs lag zwischen 3 und 18 % Wasser in Ethanol.

Ein weiteres Hauptanwendungsgebiet des erfindungsgemäßen polyelektrolytbeschichteten Verbundwerkstoffes ist die Verwendung als Membran bei der Lösungsmitteltrocknung, da hier häufig die derzeitig eingesetzten Membranwerkstoffe aufgrund des Quellungsverhaltens der Trägerpolymere und aufgrund der relativ geringen thermischen Stabilität dieser Polymere beschränkt sind auf einige wenige Lösungsmittel (Ethanol und ähnliche) und auf Temperaturen unter 80 °C. Mit Hilfe des erfindungsgemäßen Verbundwerkstoffes als Membran lassen sich auch Lösungsmittel wie z. B. THF, Methylenchlorid oder Aceton entwässern.

Die größere thermische Stabilität der erfindungsgemäßen polyelektrolytbeschichteten stoffdurchlässigen Verbundwerkstoffe ermöglicht zudem den Einsatz dieser bei Temperaturen, die höher liegen als bei Verfahren nach heutigem Stand der Technik, in der Pervaporation, wie die Behandlung von Teilströmen bei einer Rektifikation. Der enorme technische Vorteil liegt hier darin, dass die zu behandelnden Teilströme nicht mehr über Wärmetauscher geführt werden müssen, sondern sie können mit der jeweiligen Prozesstemperatur (die bei bis zu 110 °C liegen kann) direkt auf die Pervaporationsmembran geführt werden, wobei man dann häufig auch eine Dampfpermeation durchführt. Das heißt, es wird der Zulaufstrom im dampfförmigen Zustand über die Membranen geleitet. Auch als Membrane für solche Anwendungen eignen sich die erfindungsgemäßen polyelektrolytbeschichteten Verbundwerkstoffe aufgrund der erhöhten Temperaturstabilität gegenüber herkömmlichen Polyelektrolytmembranen.

In den Fig. 1 bis 4 sind Messwerte, die beim Einsatz einer erfindungsgemäßen Membran bei der Trennung von Ethanol/Wasser-gemischen erhalten wurden, aufgetragen. Die Fig. 1 und 3 geben die Abhängigkeit des Permeatflusses vom Ausgangsgehalt an Wasser im Ethanol/Wassergemisch der Vorlage (Feed) wieder.

Die Fig. 2 und 4 geben die Abhängigkeit des Wassergehaltes im Permeat in Gew.-% vom Ausgangsgehalt an Wasser im Ethanol/Wassergemisch der Vorlage (Feed) wieder.

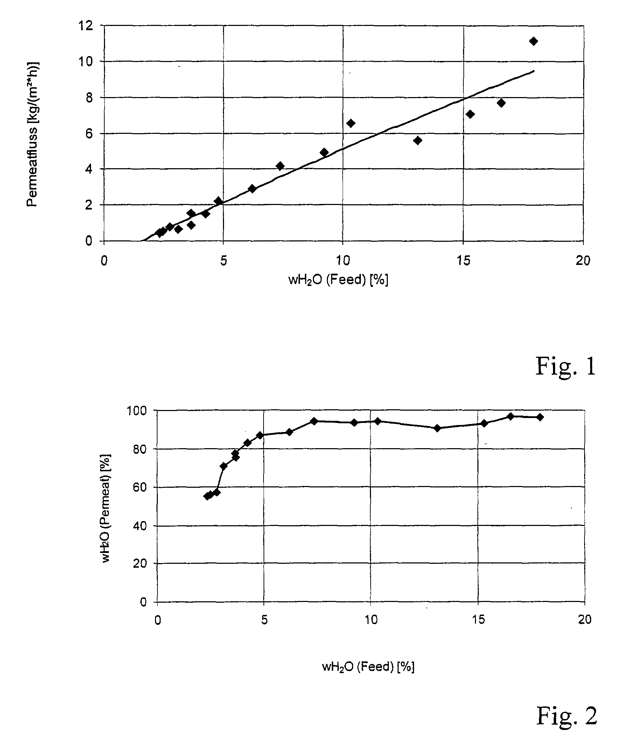

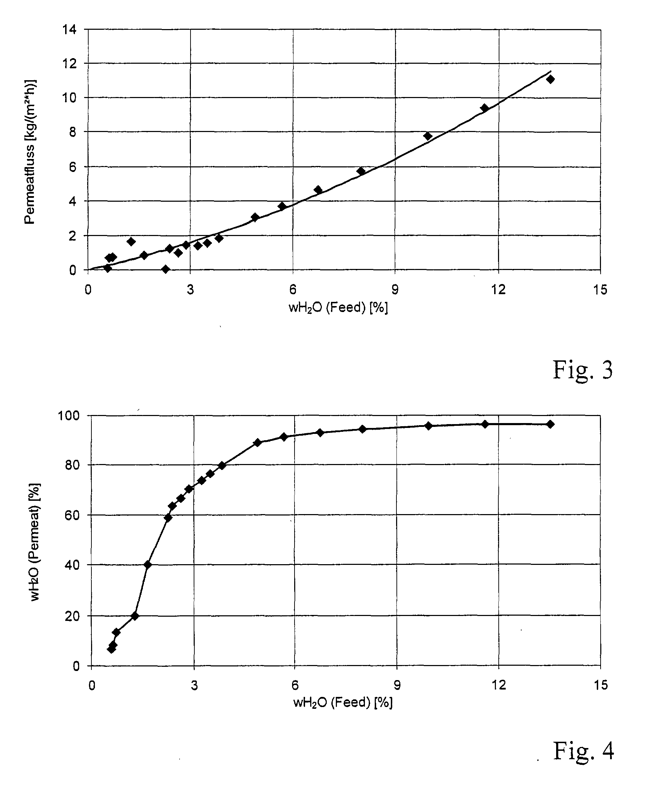

Die Messwerte, die den Abbildungen Fig. 1 und Fig. 2 zugrunde liegen, sind bei der Durchführung des Versuches aus Beispiel 3c erhalten worden, bei welchem eine Versuchstemperatur von ca. 80 °C eingestellt wurde. Die Messwerte, die den Abbildungen Fig. 3 und Fig. 4 zugrunde liegen, sind bei der Durchführung des Versuches aus Beispiel 3c erhalten worden, bei welchem die Versuchstemperatur bei ca. 105 bis 110 °C lag.

Die erfindungsgemäßen polyelektrolytbeschichteten Verbundwerkstoffe, das Verfahren zu deren Herstellung und deren Verwendung wird anhand der folgenden Beispiele beschrieben, ohne darauf beschränkt zu sein.

### Beispiel 1.1 Herstellung eines Verbundwerkstoff gemäß PCT/EP98/05939

a) 120 g Titantetraisopropylat wurden mit 140 g entionisiertem Eis unter kräftigem Rühren bis zur Feinstverteilung des entstehenden Niederschlages gerührt. Nach Zugabe von 100 g 25 %iger Salzsäure wurde bis zum Klarwerden der Phase gerührt und 280 g α-Aluminiumoxid des Typs CT3000SG der Fa. Alcoa, Ludwigshafen, zugegeben und über mehrere Tage bis zum Auflösen der Aggregate gerührt. Anschließend wurde diese Suspension in dünner Schicht auf ein Metallnetz mit 90 µm Maschenweite aus Edelstahl aufgebracht und bei 550 °C innerhalb kürzester Zeit verfestigt.
b) 40 g Titantetraisopropylat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Fa. Degussa (P25) wurde bis zum Auflösen der Agglomerate gerührt. Nachdem dieser Suspension weitere 250 ml Wasser zugegeben wurde, wird sie auf einen porösen Träger (nach Beispiel 1.1 a hergestellt) aufgebracht und bei ca. 500 °C innerhalb kürzester Zeit verfestigt.

### Beispiel 1.2 Herstellung eines ionischen Verbundwerkstoffes

a) Ein anorganischer, stoffdurchlässiger Verbundwerkstoff gemäß Beispiel 1.1 b wurde in eine Lösung getaucht, die aus folgenden Komponenten bestand: 5 % Degussa Silan 285 (ein Propylsulfonsäure-triethoxy-silan), 20 % VE-Wasser in 75 % Ethanol. Vor der Benutzung musste die Lösung 1 Stunde bei Raumtemperatur gerührt werden.
   Nachdem man überstehende Lösung abtropfen lassen hatte, konnte der Verbundwerkstoff bei 80°C bis 150°C getrocknet und anschließend genutzt werden.
b) Ein anorganischer, stoffdurchlässiger Verbundwerkstoff gemäß Beispiel 1.1 b wurde in eine Lösung getaucht, die aus folgenden Komponenten bestand: 5 % Dynasilan 1172 der Fa. Degussa-Hüls, 2,5 % Salzsäure 35 %ig; 30 % Ethanol und 62,5 % VE-Wasser. Vor Benutzung musste die Lösung ca. 30 min bei Raumtemperatur gerührt werden.
   Nachdem man überstehende Lösung abtropfen lassen hatte, konnte der Verbundwerkstoff bei 80 °C bis 150 °C getrocknet und anschließend genutzt werden.
c) 20 g Aluminiumalkoholat und 17 g Vanadiumalkoholat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Firma Degussa (P25) wurde noch bis zum Auflösen aller Agglomerate gerührt. Nach Einstellung eines pH-Wertes von ca. 6 wurde die Suspension in einer Schicht von 100 µm Dicke auf ein E-Glas-Gewebe Typ 1675 Fa. CS-Interglas aufgetragen und innerhalb von 1 Minute bei 500 °C getrocknet. Man erhielt einen mit negativen Festladungen ausgestatteten Verbundwerkstoff.
d) 20 g Tetraethylorthosilikat und 17 g Kaliumpermanganat wurden mit 20 g Wasser hydrolysiert und mit 6 %iger Wasserstoffperoxid-Lösung vollständig reduziert. Der entstandene Niederschlag wurde mit 100 g Natronlauge (25 %ig) teilweise peptisiert. Diese Lösung wurde 24 Stunden gerührt und nach Zugabe von 40 g Titandioxid der Firma Degussa (P25) wurde noch bis zum Auflösen aller Agglomerate gerührt. Nach Einstellung eines pH-Wertes von ca. 8 wurde die Suspension auf einen stoffdurchlässigen Träger mit einer Porenweite von ca. 0,1 µm (Fa. Atech., Essen) aufgetragen. Dieser Träger wurde dann innerhalb von 1 Minute bei 500 °C getrocknet. Man erhielt einen mit negativen Festladungen ausgestatteten Verbundwerkstoff.

### Beispiel 2 Polyelektrolytbeschichteter Verbundwerkstoff

a) Ein nach 1.2a ionisch ausgerüsteter Verbundwerkstoff wurde mit Polyelektrolyten beschichtet, wobei die Beschichtung durch Tauchen erfolgte, wobei eine Seite der Membran abgedeckt wurde, so dass die Beschichtung nur einseitig erfolgte. Zu diesem Zweck wurde der Verbundwerkstoff zuerst für 30 min. in eine Lösung aus Polyethylenimin (0,01 monomol/l in wässriger HCl, pH 1,7) getaucht und anschließend durch zweimaliges Tauchen in Wasser gereinigt. Dann wurde der Verbundwerkstoff für 30 min. in eine Lösung, bestehend aus 0,01 monomol/l Polyvinylsulfat-Kaliumsalz (in wässriger HCI, pH 1,7) getaucht und anschließend zweimal mit Wasser gewaschen. Dann wiederholt man den Tauchvorgang in der Polyethylenimin-Lösung. Das abwechselnde Eintauchen in die Polyethylenimin- und die Polyvinylsulfat-Kaliumsalz-Lösung erfolgte pro Lösung 60 mal. Anschließend wurde die Membran 24 h bei 90 °C im Umlufttrockenschrank getrocknet und konnte als Membran in einer Pervaporationszelle verwendet werden.
b) Gemäß Beispiel 2a wurden gemäß Beispiel 1.2a ionisch ausgerüstete Verbundwerkstoffe mit unterschiedlichen Polyelektrolyten beschichtet, wobei die Beschichtung durch Tauchen erfolgte, wobei eine Seite der Membran abgedeckt wurde, so dass die Beschichtung nur einseitig erfolgte. Die so hergestellten Membrane wurden zur Pervaporation verwendet. Die Pervaporation fand bei einer Temperatur von 58,5 °C bei einem pH-Wert von 1,7 statt. Es wurde ein Ethanol/Wasser-Gemisch eingesetzt, welches einen Anteil an Wasser von 6,2 Gew.-% aufwies. Tabelle 1 listet die jeweils verwendeten Polyelektrolyt-Lösungen mit den als Polykationen bzw. Polyanionen verwendeten Verbindungen, die Anzahl der Tauchzyklen sowie die Flussdaten, Wassergehalte im Permeat und Trennfaktoren auf. Alle so hergestellten Membranen bzw. polyelektrolytbeschichteten Verbundwerkstoffe eignen sich zum Einsatz als Pervaporationsmembran zur Trennung von Ethanol und Wasser bzw. zur Entfernung von Wasser aus organischen Lösungsmitteln.
c) Gemäß Beispiel 1.2 a ionisch ausgerüstete Verbundwerkstoffe wurden gemäß Beispiel 2a mit unterschiedlichen Polyelektrolyten beschichtet, wobei die Beschichtung durch Tauchen erfolgte, wobei eine Seite der Membran abgedeckt wurde, so dass die Beschichtung nur einseitig erfolgte. Abweichend von Beispiel 2a enthielten beide Polyelektrolytlösungen zusätzlich NaCl in einer Konzentration von 1 mol/l. Die so hergestellten Membrane wurden zur Pervaporation verwendet. Die Pervaporation fand bei einer Temperatur von 58,5 °C bei einem pH-Wert von 1,7 statt. Es wurde ein Ethanol/Wasser-Gemisch eingesetzt, welches einen Anteil an Wasser von 6,2 Gew.-% aufwies. Tabelle 1 listet ebenfalls die jeweils verwendeten Polyelektrolyt-Lösungen mit den als Polykationen bzw. Polyanionen verwendeten Verbindungen, die Anzahl der Tauchzyklen sowie die Flussdaten, Wassergehalte im Permeat und Trennfaktoren auf. Alle so hergestellten Membranen bzw. polyelektrolytbeschichteten Verbundwerkstoffe eignen sich zum Einsatz als Pervaporationsmembran zur Trennung von Ethanol und Wasser bzw. zur Entfernung von Wasser aus organischen Lösungsmitteln.
d) Ein nach 1.2a ionisch ausgerüsteter Verbundwerkstoff wurde mit Polyelektrolyten beschichtet, wobei die Beschichtung durch Tauchen erfolgte, wobei eine Seite der Membran abgedeckt wurde, so dass die Beschichtung nur einseitig erfolgte. Zu diesem Zweck wurde der Verbundwerkstoff zuerst für 30 min. in eine Lösung aus Polyvinylamin (0,01 monomol/l in wässriger HCl, pH 1,7), die NaClO₄ in einer Konzentration von 1 mol/l aufwies, getaucht und anschließend durch zweimaliges Tauchen in Wasser gereinigt. Dann wurde der Verbundwerkstoff für 30 min. in eine Lösung, bestehend aus 0,01 monomol/l Polyvinylsulfat-Kaliumsalz (in wässriger HCl, pH 1,7), die ebenfalls NaClO₄ in einer Konzentration von 1 mol/l aufwies, getaucht und anschließend zweimal mit Wasser gewaschen. Dann wiederholt man den Tauchvorgang in der Polyvinylamin-Lösung. Das abwechselnde Eintauchen in die Polyethylenimin- und die Polyvinylsulfat-Kaliumsalz-Lösung erfolgte pro Lösung 30 mal, so dass 60 Schichten auf den Verbundwerkstoff aufgebracht wurden. Anschließend wurde die Membran 24 h bei 90 °C im Umlufttrockenschrank getrocknet und konnte als Membran in einer Pervaporationszelle verwendet werden.

**Tabelle 1:**

| In den Versuchen 2b und 2c verwendete Polyelektolyt-Lösungen, Anzahl der Tauchzyklen, Flussdaten, Wassergehalte im Permeat und Trennfaktoren. | | | | | |
|---|---|---|---|---|---|
| Polykation | Polyanion | Anzahl der Tauchzyklen | Fluss [g/m²h] | H₂O_{Permeat} [Gew.-%] | α |
| PEI | PVS | 60 | 159 | 61,6 | 24,3 |
| PVAM | PVS | 60 | 316 | 70,3 | 35,8 |
| PAH | PAMSA | 60 | 216 | 62,0 | 24,7 |
| PVAM + (1 mol/l NaCl) | PVS + (1 mol/l NaCl) | 30 | 693 | 51,1 | 15,8 |
| PVAM + (1 mol/l NaCl) | PVS + (1 mol/l NaCl) | 45 | 308 | 77,3 | 51,6 |
| PVAM + (1 mol/l NaCl) | PVS + (1 mol/l NaCl) | 60 | 210 | 91,0 | 153 |

In der Tabelle 1 bedeuten:
- PEI:: Poly(ethylenimin)
- PVS:: Poly(vinylsulfat Kaliumsalz)
- PVAM:: Poly(vinylamin)

- PAMSA:: Poly(2-acrylamido-2-methyl-1-propansulfonsäure)
- PAH:: Poly(allylamin Hydrochlorid)

Der Trennfaktor α ist der Quotient aus Zusammensetzung des Permeats (p) und Zusammensetzung des Zulaufs (z) also: α=([H₂O]p/[Ethanol]p)/([H₂O]z/[Ethanol]z)

### Beispiel 3 Verwendungsbeispiele

a) Mit dem nach Beispiel 2a hergestellten polyelektrolytbeschichteten Verbundwerkstoff war es möglich, ein Gemisch aus 94 % Ethanol und 6 % Wasser zu trennen. Der Fluss durch den als Membran verwendeten polyelektrolytbeschichteten Verbundwerkstoff betrug 159 g/m²h mit einem Ethanolgehalt von ca. 30 bis 40 % im Permeat. Die Temperatur des Retentats betrug 58,5 °C und der Permeatdruck 15 mbar.
b) Mit einem nach Beispiel 2c unter Verwendung von Polyvinylamin als Polykation und Polyvinylsulfat als Polyanion hergestellten polyelektrolytbeschichteten Verbundwerkstoff wurde das gleiche Gemisch unter den selben Temperaturbedingungen wie in Beispiel 3a getrennt. Der Fluss betrug 210 g/m²h bei einem Ethanolgehalt des Permeats von 9 %.
c) Mit einem nach Beispiel 2d hergestellten polyelektrolytbeschichteten Verbundwerkstoff wurden verschiedene Mischungen aus Wasser und Ethanol bei einer Temperatur von 80 °C abgetrennt. In Fig. 1 ist der Verlauf des Permeatflusses in Abhängigkeit vom Wassergehalt in der zu trennenden Mischung (Feed) aufgetragen. In Fig. 2 ist der Wassergehalt des Permeats in Abhängigkeit vom Wassergehalt in der zu trennenden Mischung aufgetragen.
   Es ist deutlich zu erkennen, dass bei einer Temperatur von 80 °C ein Ausgangsgemisch (Feed), welches ca. 5 % Wasser und ca. 95 % Ethanol aufwies, bei einem Permeatfluss von ca. 2 000 g/m²h, eine Trennung der Gestalt stattfindet, dass im Permeat ein Wassergehalt von ca. 88 % und ein Ethanolgehalt von ca. 12 % erreicht wird.
d) Der Versuch aus Beispiel 3c wurde bei einer Temperatur von 105 bis 110 °C wiederholt. In Fig. 3 ist der Verlauf des Permeatflusses in Abhängigkeit vom Wassergehalt in der zu trennenden Mischung (Feed) aufgetragen. In Fig. 4 ist der Wassergehalt des Permeats in Abhängigkeit vom Wassergehalt in der zu trennenden Mischung aufgetragen.
   Es ist deutlich zu erkennen, dass bei einer Temperatur von 105 bis 110 °C ein Ausgangsgemisch (Feed), welches ca. 5,5 % Wasser und ca. 94,5 % Ethanol aufwies, bei einem Permeatfluss von ca. 4 000 g/m²h, eine Trennung der Gestalt stattfindet, dass im Permeat ein Wassergehalt von ca. 92 % und ein Ethanolgehalt von ca. 8 % erreicht wird.

## Patentansprüche

1. Stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist,
**dadurch gekennzeichnet,**
**dass** der Verbundwerkstoff auf den inneren und/oder äußeren Oberflächen eine Polyelektrolytschicht trägt.

2. Verbundwerkstoff nach Anspruch 1,
**dadurch gekennzeichnet,**
**dass** der Verbundwerkstoff zumindest ein anorganisches und/oder organisches Material aufweist, das Oberflächenladungen trägt.

3. Verbundwerkstoff nach Anspruch 2,
**dadurch gekennzeichnet,**
**dass** die Oberflächen des anorganischen und/oder organischen Materials ionische Gruppen aufweist, an denen eine Polyelektrolytschicht adsorbiert werden kann.

4. Verbundwerkstoff nach zumindest einem der Ansprüche 2 oder 3,
**dadurch gekennzeichnet,**
**dass** als organisches Oberflächenladungen tragendes Material zumindest ein Polymer im Verbundwerkstoff vorhanden ist.

5. Verbundwerkstoff nach Anspruch 4,
**dadurch gekennzeichnet,**
**dass** das Polymer ein sulfoniertes Polytetrafluorethylen, sulfoniertes Polyvinylidenfluorid, aminolysiertes Polytetrafluorethylen, aminolysiertes Polyvinylidenfluorid, sulfoniertes Polysulfon, aminolysiertes Polysulfon, sulfoniertes Polyetherimid, aminolysiertes Polyetherimid oder ein Gemisch aus diesen ist.

6. Verbundwerkstoff nach zumindest einem der Ansprüche 2 bis 5,
**dadurch gekennzeichnet,**
**dass** als anorganisches Oberflächenladungen tragendes Material zumindest eine Verbindung aus der Gruppe der Oxide, Phosphate, Phosphite, Phosphonate, Sulfate, Sulfonate, Vanadate, Stannate, Plumbate, Chromate, Wolframate, Molybdate, Manganate, Titanate, Silikate, Alumosilikate und Aluminate oder Gemische dieser Verbindungen zumindest eines der Elemente Al, K, Na, Ti, Fe, Zr, Y, Va, W, Mo, Ca, Mg, Li, Cr, Mn, Co, Ni, Cu oder Zn oder eines Gemisches dieser Elemente vorhanden ist.

7. Verbundwerkstoff nach Anspruch 6,
**dadurch gekennzeichnet,**
**dass** als anorganisches Oberflächenladungen tragendes Material zumindest eine teilweise nicht hydrolysierbare Gruppen tragende amorphe und/oder kristalline Verbindung zumindest eines der Elemente Zr, Si, Ti, Al, Y oder Vanadium oder ein Gemisch dieser Elemente oder Verbindungen vorhanden ist.

8. Verbundwerkstoff nach zumindest einem der Ansprüche 1 bis 7,
**dadurch gekennzeichnet,**
**dass** die Polyelektrolytschicht Polyelektrolyte, die negative und/oder positive Ladungen tragen, aufweist.

9. Verbundwerkstoff nach zumindest einem der Ansprüche 1 bis 8,
**dadurch gekennzeichnet,**
**dass** die Polyelektrolytschicht alternierend anionische und kationische oder kationische und anionische Polyelektrolyte aufweist.

10. Verbundwerkstoff nach zumindest einem der Ansprüche 1 bis 9,
**dadurch gekennzeichnet,**
**dass** die Polyelektrolytschicht zumindest einen Polyelektrolyten aus einer Gruppe, die Polyallylaminhydrochlorid, Polyethylenimin, Polyvinylamin, Polyvinylsulfat-Kaliumsalz, Polystyrolsulfonat-Natriumsalz und Polyacrylamido-2-methyl-1-propansulfonsäure aufweist, umfasst

11. Verbundwerkstoff nach zumindest einem der Ansprüche 1 bis 10,
**dadurch gekennzeichnet,**
**dass** die Polyelektrolytschicht ein Verhältnis von Kohlenstoffatomen zu möglichen Ionenpaarbindungen von 2 zu 1 bis 20 zu 1 aufweist.

12. Verbundwerkstoff nach Anspruch 11,
**dadurch gekennzeichnet,**
**dass** die Polyelektrolytschicht ein Verhältnis von Kohlenstoffatomen zu möglichen Ionenpaarbindungen von 4 zu 1 bis 8 zu 1 aufweist.

13. Verbundwerkstoff nach zumindest einem der Ansprüche 1 bis 12,
**dadurch gekennzeichnet,**
**dass** der polyelektrolytbeschichtete, stoffdurchlässige Verbundwerkstoff flexibel ist.

14. Verbundwerkstoff nach zumindest einem der Ansprüche 1 bis 13,
**dadurch gekennzeichnet,**
**dass** der polyelektrolytbeschichtete, stoffdurchlässige Verbundwerkstoff bis zu einem kleinsten Radius von 5 mm biegbar ist.

15. Verfahren zur Herstellung eines Verbundwerkstoffes gemäß zumindest einem der Ansprüche 1 bis 14,
**dadurch gekennzeichnet,**
**dass** ein Oberflächenladungen aufweisender Verbundwerkstoff auf Basis zumindest eines durchbrochenen und stoffdurchlässigen Trägers, der auf zumindest einer Seite des Trägers und/oder im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, zumindest einmal mit einem Polyelektrolyt beschichtet wird.

16. Verfahren nach Anspruch 15,
**dadurch gekennzeichnet,**
**dass** ein Verbundwerkstoff, der keine Oberflächenladungen aufweist, mit zumindest einem Oberflächenladungen tragenden Material oder mit zumindest einem Material, welches nach einer weiteren Behandlung Oberflächenladungen trägt, behandelt wird.

17. Verfahren nach zumindest einem der Ansprüche 15 oder 16,
**dadurch gekennzeichnet,**
**dass** der Oberflächenladungen aufweisende Verbundwerkstoff durch Behandlung eines Verbundwerkstoffes, der eine Porenweite von 0,001 bis 5 µm und keine Oberflächenladungen aufweist, mit zumindest einem Oberflächenladungen aufweisenden Material oder mit zumindest einem Material, welches nach einer weiteren Behandlung Oberflächenladungen aufweist, erhalten wird.

18. Verfahren nach zumindest einem der Ansprüche 16 bis 17,
**dadurch gekennzeichnet,**
**dass** die Behandlung des Verbundwerkstoffes mit zumindest einem Oberflächenladungen aufweisenden Material oder mit zumindest einem Material, welches nach einer weiteren Behandlung Oberflächenladungen aufweist, durch Tränken, Tauchen, Bestreichen, Aufwalzen, Aufrakeln, Besprühen oder andere Beschichtungstechniken erfolgt.

19. Verfahren nach zumindest einem der Ansprüche 16 bis 18,
**dadurch gekennzeichnet,**
**dass** der Verbundwerkstoff nach der Behandlung mit zumindest einem Oberflächenladungen aufweisenden Material oder zumindest einem Material, welches nach einer weiteren Behandlung Oberflächenladungen aufweist, thermisch behandelt wird.

20. Verfahren nach Anspruch 19,
**dadurch gekennzeichnet,**
**dass** die thermische Behandlung bei einer Temperatur von 100 bis 700 °C durchgeführt wird.

21. Verfahren nach zumindest einem der Ansprüche 16 bis 20,
**dadurch gekennzeichnet,**
**dass** das Oberflächenladungen aufweisende Material oder das Material, welches nach einer weiteren Behandlung Oberflächenladungen aufweist, in Form einer Lösung mit einem Lösungsmittelanteil von 1 bis 99 % aufgebracht wird.

22. Verfahren nach zumindest einem der Ansprüche 16 bis 21,
**dadurch gekennzeichnet,**
**dass** als Material zur Herstellung des Oberflächenladungen aufweisenden Verbundwerkstoffes Brönstedtsäuren oder -basen eingesetzt werden.

23. Verfahren nach Anspruch 15,
**dadurch gekennzeichnet,**
**dass** der Oberflächenladungen aufweisende Verbundwerkstoff durch Einsatz zumindest eines Oberflächenladungen aufweisenden Materials oder durch Einsatz zumindest eines Materials, welches nach einer weiteren Behandlung Oberflächenladungen aufweist, bei der Herstellung des Verbundwerkstoffes erhalten wird.

24. Verfahren nach Anspruch 23,
**dadurch gekennzeichnet,**
**dass** der Oberflächenladungen aufweisende Verbundwerkstoff durch Einsatz zumindest einer polymergebundener Brönstedtsäure oder -base bei der Herstellung des Verbundwerkstoffes erhalten wird.

25. Verfahren nach zumindest einem der Ansprüche 23 oder 24,
**dadurch gekennzeichnet,**
**dass** der Oberflächenladungen aufweisende Verbundwerkstoff durch Einsatz zumindest eines Sols, das Festladungen tragende Polymerpartikel oder Polyelektrolytlösungen umfasst, erhältlich ist.

26. Verfahren nach zumindest einem der Ansprüche 23 bis 25,
**dadurch gekennzeichnet,**
**dass** der Oberflächenladungen aufweisende Verbundwerkstoff durch Einsatz eines Sols, welches zumindest ein Oberflächenladungen aufweisendes Material oder zumindest ein Material, welches nach einer weiteren Behandlung Oberflächenladungen aufweist, aufweist, bei der Herstellung des Verbundwerkstoffes erhalten wird.

27. Verfahren nach Anspruch 26,
**dadurch gekennzeichnet,**
**dass** das Sol durch Hydrolysieren zumindest einer Metallverbindung, zumindest einer Halbmetallverbindung oder zumindest einer Mischmetallverbindung oder eine Kombination dieser Verbindungen mit einer Flüssigkeit, einem Gas und/oder einem Feststoff erhalten wird.

28. Verfahren nach zumindest einem der Ansprüche 26 oder 27,
**dadurch gekennzeichnet,**
**dass** das Sol nichtstöchiometrische Metall-, Halbmetall- oder Nichtmetalloxide oder Hydroxide umfasst, die durch Änderung der Oxidationsstufe des entsprechenden Elements erzeugt wurden.

29. Verfahren nach zumindest einem der Ansprüche 26 bis 28,
**dadurch gekennzeichnet,**
**dass** dem Sol Substanzen zugesetzt werden, die zur Bildung von anorganischen Oberflächenladungen aufweisenden Strukturen führen.

30. Verfahren nach zumindest einem der Ansprüche 15 bis 29,
**dadurch gekennzeichnet,**
**dass** der Oberflächenladungen aufweisende Verbundwerkstoff 1 bis 500 mal mit zumindest einem organischen Polyelektrolyten beschichtet wird.

31. Verfahren nach Anspruch 30,
**dadurch gekennzeichnet,**
**dass** der Oberflächenladungen aufweisende Verbundwerkstoff 20 bis 100 mal mit zumindest einem organischen Polyelektrolyten beschichtet wird.

32. Verfahren nach zumindest einem der Ansprüche 30 oder 31,
**dadurch gekennzeichnet,**
**dass** der Oberflächenladungen aufweisende Verbundwerkstoff alternierend mit zumindest einem anionischen Polyelektrolyten und zumindest einem kationischen Polyelektrolyten beschichtet wird.

33. Verfahren nach Anspruch 32,
**dadurch gekennzeichnet,**
**dass** als kationische Polyelektrolyten Polyallylaminhydrochlorid, Polyethylenimin und/oder Polyvinylamin zum Beschichten verwendet wird.

34. Verfahren nach Anspruch 32,
**dadurch gekennzeichnet,**
**dass** als anionische Polyelektrolyten Polyacrylamido-2-methyl-1-propansulfonsäure und/oder Polyvinylsulfat-Kaliumsalz zum Beschichten verwendet wird.

35. Verfahren nach zumindest einem der Ansprüche 15 bis 34,
**dadurch gekennzeichnet,**
**dass** zum Beschichten Lösungen von Polyelektrolyten in verdünnten Lösungen von Säuren oder Basen verwendet werden.

36. Verfahren nach zumindest einem der Ansprüche 15 bis 35,
**dadurch gekennzeichnet,**
**dass** das Beschichten des Oberflächenladungen tragenden Verbundwerkstoffes mit zumindest einem Polyelektrolyten durch Aufsprühen, Aufrakeln, Aufwalzen und/oder Tauchen erfolgt.

37. Verwendung eines Verbundwerkstoffes gemäß zumindest einem der Ansprüche 1 bis 14 als Pervaporationsmembran.

38. Verwendung eines Verbundwerkstoffes gemäß zumindest einem der Ansprüche 1 bis 14 als Dampfpermeationsmembran.

39. Verwendung eines Verbundwerkstoffes gemäß zumindest einem der Ansprüche 1 bis 14 als Membran zur Trennung von Alkohol/Wasser-Gemischen, insbesondere Ethanol/Wasser-Gemischen.
